# EUROPÄISCHE PATENTSCHRIFT

(11) **EP 4 034 427 B1**
(45) Veröffentlichungstag und Bekanntmachung des Hinweises auf die Patenterteilung: **29.01.2025**
(21) Anmeldenummer: 20775837.6
(22) Anmeldetag: 15.09.2020
(51) Int. Cl.: B60R 7/04, B60N 3/02, B60R 21/02, B60R 11/00

(54) **BETÄTIGUNGSGRIFF, ABDECKUNGSEINRICHTUNG UND ABLAGEFACH SOWIE EIN KRAFTFAHRZEUG**
ACTUATING HANDLE, COVER DEVICE AND STOWAGE COMPARTMENT, AND ALSO A MOTOR VEHICLE
POIGNÉE D'ACTIONNEMENT, DISPOSITIF DE RECOUVREMENT ET COMPARTIMENT DE RANGEMENT, AINSI QUE VÉHICULE À MOTEUR

(30) Priorität: 24.09.2019 DE 102019214607
(43) Veröffentlichungstag der Anmeldung: 03.08.2022
(73) Patentinhaber: VOLKSWAGEN AKTIENGESELLSCHAFT, 38440 Wolfsburg (DE)
(72) Erfinder: REHLING, Peter, 38518 Gifhorn (DE); KESSLER, Jörn, 27607 Langen (DE)
(86) Internationale Anmeldenummer: PCT/EP2020/075705
(87) Internationale Veröffentlichungsnummer: WO 2021/058322

(56) Entgegenhaltungen:
- WO-A1-2011/143467
- DE-A1- 102009 057 783
- DE-B- 1 297 500
- JP-A- H08 192 685
- US-A1- 2007 045 366

## Beschreibung

Die Erfindung betrifft einen Betätigungsgriff zur Anordnung an einer manuell zu betätigenden Betätigungseinrichtung im Innenraum eines Kraftfahrzeugs. Ferner betrifft die Erfindung eine den Betätigungsgriff umfassende Abdeckungseinrichtung sowie ein Ablagefach, welches die Abdeckungseinrichtung umfasst. Darüber hinaus betrifft die Erfindung ein Kraftfahrzeug, welches einen Betätigungsgriff, eine Abdeckungseinrichtung und/oder ein Ablagefach aufweist.

Elemente zur Innenraumausstattung von Kraftfahrzeugen, zu denen auch Griffe und Bedieneinrichtungen aller Art zu zählen sind, müssen bestimmte konstruktive Anforderungen erfüllen, die sicherstellen, dass das Verletzungsrisiko für Fahrzeuginsassen, insbesondere im Fall eines Unfalls, gering ist. Ein Risiko besteht darin, dass ein Fahrzeuginsasse sich bei einem Unfall eine Verletzung durch Aufschlagen eines Körperteiles, insbesondere des Kopfes, an einer scharfen und harten Kante zuzieht. Die Sicherstellung dieser Anforderungen erfolgt mit Hilfe von Konstruktionsnormen sowie standardisierten Tests, die einen solchen Fall simulieren, und die beispielsweise in der Vorschrift ECE-R-21 definiert sind.

Derartige sicherheitsrelevante Normen bzw. deren Umsetzung schränken die gestalterische Freiheit, insbesondere hinsichtlich des Designs, stark ein. Es besteht daher das Bedürfnis, die gestalterischen Merkmale einer Konstruktion frei definieren zu können bei gleichzeitiger Erfüllung der Sicherheitsvorschriften.

Aus dem Stand der Technik sind verschiedene Varianten zur Gestaltung von Bedieneinrichtungen und Griffen bekannt.

Die DE 1 297 500 A zeigt beispielsweise einen Bedienungsgriff für ein Fahrzeug, welcher einen Hohlkörper aus einem elastischen Material aufweist. In dem Hohlraum ist ein Polster aus Schaumkunststoff eingeschlossen.

Die DE 85 25 127 U1 zeigt ein Bauelement, welches einen formstabilen Kern besitzt, der mit einem Schaum-Kunststoff unterschiedlicher Dicke ummantelt ist. Je dicker die Schaum-Kunststoffschicht ausgeführt ist, umso weicher ist das Bauelement in dem betreffenden Bereich.

Der vorliegenden Erfindung liegt die Aufgabe zugrunde, einen Betätigungsgriff, eine Abdeckungseinrichtung sowie ein Ablagefach zur Verfügung zu stellen, welche auf einfache und kostengünstige Weise gleichermaßen Sicherheitsanforderungen genügen und weitgehende Designfreiheiten bieten.

Die Aufgabe wird erfindungsgemäß gelöst durch einen Betätigungsgriff gemäß Anspruch 1 sowie durch eine Abdeckungseinrichtung gemäß Anspruch 7 und durch ein Ablagefach gemäß Anspruch 8. Vorteilhafte Ausgestaltungsformen des Betätigungsgriffs werden in den Unteransprüchen 2-6 aufgezeigt. Ergänzend wird ein Kraftfahrzeug gemäß Anspruch 9 zur Verfügung gestellt.

Ein erster Aspekt der Erfindung ist ein Betätigungsgriff zur Anordnung an einer manuell zu betätigenden Betätigungseinrichtung im Innenraum eines Kraftfahrzeugs. Erfindungsgemäß umfasst der Betätigungsgriff eine Basiseinheit, welche aus einem ersten Material mit einer ersten Härte ausgebildet ist und die eine wenigstens abschnittsweise zur Befestigung an einer Betätigungseinrichtung ausgebildete Anschlussseite aufweist. Ferner umfasst der Betätigungsgriff ein mit der Basiseinheit auf der der Anschlussseite gegenüberliegenden Seite mechanisch verbundenes und zumindest abschnittsweise die Außenseite des Betätigungsgriffs ausbildendes Griffelement. Das Griffelement ist ausgebildet aus einem zweiten Material mit einer zweiten Härte, wobei die erste Härte größer ist als die zweite Härte und die Shore A Härte des zweiten Materials kleiner als 50 ist. Zwischen in unterschiedlichen Ebenen benachbart angeordneten Außenflächen der Basiseinheit ist ein Radius R_{T} zur wenigstens teilweisen Abrundung der Basiseinheit ausgeführt, wobei gilt, dass R_{T} > 3,2 mm ist.

Weiterhin weist die Basiseinheit wenigstens ein Befestigungselement zur mechanischen Fixierung des Betätigungsgriffs an der manuell zu betätigenden Betätigungseinrichtung sowie mechanisch mit dem Befestigungselement verbunden einen Grundkörper auf, wobei zumindest der Grundkörper mit Abrundungen zwischen in unterschiedlichen Ebenen benachbart angeordneten Außenflächen mit einem Radius R_{T} ausgeführt ist, wobei gilt, dass R_{T} > 3,2 mm ist.

Der Betätigungsgriff kann auch als Handgriff oder Anfasser bezeichnet werden. Er dient der manuellen Betätigung oder Bedienung einer Betätigungseinrichtung, mit welcher er mechanisch verbindbar ist. Eine solche Betätigungseinrichtung ist im Sinne der Erfindung beispielsweise eine schwenkbare Klappe oder ein auf- und abrollbares Rollo, welches zum Verschließen und/oder Abdecken von Ablagefächern und/oder Armaturen im Innenraum eines Kraftfahrzeugs verwendet werden kann. Zur manuellen Bedienung der Betätigungseinrichtung wird der Betätigungsgriff von einer Person gegriffen und von der Person mit einer Kraft beaufschlagt, wodurch eine Bewegung der Betätigungseinrichtung bewirkbar ist.

Der erfindungsgemäße Betätigungsgriff umfasst eine Basiseinheit und ein Griffelement.

Die Basiseinheit weist eine Anschlussseite auf, die dazu eingerichtet ist, eine mechanische Verbindung mit einer Betätigungseinrichtung auszubilden. Die mechanische Verbindung zwischen Basiseinheit und Betätigungseinrichtung kann sowohl mittelbar, also unter Zuhilfenahme eines Verbindungsmittels wie Schraube, Niet und/oder Klebstoff, als auch unmittelbar, beispielsweise mittels Formschluss, erfolgen. Die Anschlussseite entspricht typischerweise einer Unterseite. An die Anschlussseite bzw. Unterseite der Basiseinheit grenzt die Oberseite der Basiseinheit an. Die Oberseite bezeichnet den Teil der Oberfläche der Basiseinheit, der nicht zur Anordnung und/oder Befestigung an einer Betätigungseinrichtung vorgesehen ist und typischerweise von dieser weg weist. Die Oberseite bildet wenigstens abschnittsweise eine der Anschlussseite abgewandte Seite aus. Die Oberseite wird durch benachbarte Außenflächen der Basiseinheit gebildet, die in unterschiedlichen Ebenen angeordnet sind.

Die Basiseinheit kann ein Voll- oder Hohlkörper sein.

Das Griffelement kann auch als Verkleidungselement bezeichnet werden. Das Griffelement bildet wenigstens abschnittsweise die Außenseite des Betätigungsgriffs, also die bei bestimmungsgemäßer Anordnung wenigstens teilweise dem Innenraum eines Fahrzeugs zugewandte Seite, aus. Dementsprechend ist das Griffelement, insbesondere dessen Außenseite, dasjenige Element, welches von einer Person berührt werden kann. Das Material, welches das Griffelement bzw. insbesondere dessen Außenseite ausbildet, bietet daher bevorzugt eine als im Durchschnitt angenehm empfundene haptische Wahrnehmung.

Das Griffelement ist mit der Basiseinheit an einer der Anschlussseite der Basiseinheit abgewandten Seite wenigstens abschnittsweise mechanisch verbunden, wobei die Verbindung durch Kraft-, Form- und/oder Stoffschluss realisiert sein kann. Vorteilhafterweise ist das Griffelement, beispielsweise zu Prüfungszwecken, von der Basiseinheit entfernbar.

Typischerweise ist die Basiseinheit vom Griffelement wenigstens teilweise überdeckt. Bevorzugt ist lediglich die Oberseite der Basiseinheit wenigstens teilweise mit dem Griffelement überdeckt, während die Anschlussseite nicht vom Griffelement überdeckt ist.

Die zur Oberseite der Basiseinheit senkrechte Erstreckung des Griffelements, mit anderen Worten dessen Materialstärke bzw. -dicke, kann dabei bereichsweise unterschiedlich ausgeführt sein. In einer Ausführungsform ist die Materialstärke in allen überdeckten Bereichen der Basiseinheit im Wesentlichen gleich.

Die Basiseinheit und das Griffelement sind aus verschiedenen Materialien ausgebildet, die eine unterschiedliche Härte aufweisen. Die Basiseinheit ist zumindest an die erfindungsgemäßen Radien aufweisen Formelementen aus einem ersten Material ausgebildet und das Griffelement ist aus einem zweiten Material ausgebildet, wobei das erste Material härter ist als das zweite Material. Mit anderen Worten umfasst der Betätigungsgriff eine harte Komponente, die Basiseinheit, und eine weiche Komponente, das Griffelement. Bei den Materialien kann es sich auch um Material-Gemische oder Kompositmaterialien handeln, wobei sich die Härte des Material-Gemisches aus den Einzel-Härten der das Gemisch ausbildenden Einzel-Materialien zusammensetzt.

Typischerweise kann das erste Material, aus dem die Basiseinheit zumindest im Bereich der erfindungsgemäßen Radien ausgebildet ist, wenigstens teilweise ein Metall, insbesondere Aluminium bzw. eine Aluminiumlegierung sein. Alternativ kann das erste Material ein Kunststoff sein. Typischerweise ist das zweite Material, aus dem das Griffelement ausgebildet ist, ein Kunststoff. Insbesondere kann es sich beim zweiten Material um einen geschäumten Kunststoff handeln.

Das zweite Material weist eine Shore A Härte von weniger als 50 auf. Insbesondere weist das zweite Material eine Shore A Härte von weniger als 40 auf, gegebenenfalls von weniger als 30 auf. Die Härteangaben beziehen sich dabei auf Shore A Härten ermittelt nach dem in DIN ISO 7610-1 beschriebenen Verfahren. Das Griffelement ist elastisch verformbar, das heißt, dass das Griffelement bei einer Krafteinwirkung nachgibt und bei Entlastung wieder die vorherige Form annimmt.

Die Oberseite der Basiseinheit wird durch mehrere Außenflächen der Basiseinheit ausgebildet, die in unterschiedlichen Ebenen angeordnet sind. Zwischen wenigstens zwei benachbarten Außenflächen ist eine Abrundung ausgebildet, welche einen Radius R_{T} von mehr als 3,2 mm aufweist. Der Radius R_{T} wird typischerweise auch als Kopfaufschlagradius bezeichnet. Mit anderen Worten ist wenigstens eine Kante und/oder Ecke der Basiseinheit mit einem Radius von wenigstens 3,2 mm abgerundet. Insbesondere sind alle Kanten und/oder Ecken der Basiseinheit, welche bei einer Kopfaufschlagprüfung mit einem Prüfkörper in Berührung kommen können, mit einem Radius von wenigstens 3,2 mm abgerundet. Durch den Radius R_{T} von mehr als 3,2 mm wird das Risiko schwerwiegender Kopfverletzungen bei einem Aufprall reduziert.

Der besondere Vorteil des erfindungsgemäßen Betätigungsgriffs liegt in der konstruktiven Einhaltung der Sicherheitserfordernisse, insbesondere hinsichtlich eines Verletzungsrisikos durch Kopfaufschlag, bei gleichzeitiger Gestaltungsfreiheit hinsichtlich der äußeren Form des Betätigungsgriffs.

Die Oberseite des Grundkörpers ausbildenden benachbarten Außenflächen sind mit einem Radius von mehr als 3,2 mm abgerundet. Dabei ist die Oberseite des Grundkörpers wenigstens der Bereich der Oberseite der Basiseinheit, der durch den Grundkörper gebildet ist.

Das Befestigungselement ist zur mechanischen Fixierung an einer manuell zu betätigenden Betätigungseinrichtung eingerichtet. Die Fixierung kann ebenfalls durch Kraft-, Form- und/oder Stoffschluss realisiert sein. In einer spezifischen Ausgestaltungsform weist das Befestigungselement auf seiner dem Grundkörper abgewandten Seite wenigsten ein Fixierungselement auf, welches mit einer komplementären Aussparung in der Betätigungseinrichtung in Eingriff bringbar ist.

Das Befestigungselement kann in einer Ausgestaltungsform eine bauliche Einheit mit dem Grundkörper ausbilden. Mit anderen Worten kann die Basiseinheit einteilig ausgeführt sein und wenigstens ein Fixierungselement aufweisen.

Bevorzugt ist die Oberseite des Grundkörpers vollständig mit dem Griffelement überdeckt, so dass der Grundkörper wenigstens bei bestimmungsgemäßer Anordnung an einer Betätigungseinrichtung nicht sichtbar ist. Der Grundkörper kann in diesem Sinne auch als Trägerelement für das Griffelement bezeichnet werden.

Der Vorteil dieser Ausgestaltung besteht in einer Trennung der Funktion der Befestigung des Betätigungsgriffs an der Betätigungseinrichtung von der Funktion der Befestigung des Griffelements am Grundkörper bzw. an der Basiseinheit.

In einer Ausgestaltungsform des Betätigungsgriffs bildet das Befestigungselement wenigstens einen Abschnitt der Außenseite des Betätigungsgriffs aus.

Mit anderen Worten ist in dieser Ausgestaltung die Basiseinheit nicht vollständig mit dem Griffelement überdeckt. Insbesondere ist lediglich wenigstens abschnittsweise, bevorzugt vollständig, der Grundkörper von dem Griffelement überdeckt.

Das Befestigungselement bildet einen sichtbaren Abschnitt der Außenseite des Betätigungsgriffs aus. Das Befestigungselement ist in dieser Ausgestaltungsform somit auch ein Dekorelement. Insbesondere kann das Befestigungselement aus einem dritten Material ausgebildet sein, wobei das dritte Material bevorzugt Material mit einer wertigen Optik, wie beispielsweise Chrom, ist.

Der Abschnitt der Außenseite des Betätigungsgriffs, der durch das Befestigungselement ausgebildet wird, grenzt bevorzugt direkt an einen Abschnitt der Außenseite, der durch das Griffelement ausgebildet ist. Dabei ist der Übergang zwischen beiden Abschnitten im Wesentlichen eben, das heißt mit anderen Worten, dass im Übergangsbereich im Wesentlichen keine Sprünge, Fugen oder Kanten, insbesondere keine sichtbaren und/oder spürbaren Sprünge, Fugen oder Kanten, ausgebildet sind.

Der Vorteil dieser Ausgestaltung liegt in einem optisch ansprechenden Übergang zwischen Betätigungsgriff und Betätigungseinrichtung.

In einer Ausgestaltungsform des Betätigungsgriffs ist der Grundkörper am Befestigungselement mittels einer kraft- und/oder formschlüssigen Verbindung, insbesondere einer Rastverbindung, fixiert.

Der Grundkörper und das Befestigungselement sind mechanisch miteinander verbunden. Bevorzugt ist eine kraft- und/oder formschlüssige Verbindung realisiert, bei der wenigstens ein Verbindungelement des Grundkörpers in eine komplementäre Aussparung des Befestigungselements eingreift. Insbesondere ist die Verbindung als Rastverbindung ausgeführt.

Der Vorteil dieser Ausführung besteht in einem einfachen Fügevorgang zur Verbindung von Grundkörper und Befestigungselement.

Alternativ oder zusätzlich kann wenigstens ein Verbindungselement ebenso zur Realisierung einer Schweißverbindung zwischen dem Grundkörper und dem Befestigungselement ausgebildet sein.

In einer anderen Ausgestaltungsform ist die mechanische Verbindung alternativ oder zusätzlich mittels eines adhäsiv wirkenden Klebstoffs realisiert.

In einer Ausgestaltungsform des Betätigungsgriffs weist das Griffelement an seiner Außenseite zumindest eine Kante und/oder Ecke mit einem Kantenradius R_{K} auf, wobei R_{K} < 3,2 mm ist.

Mit anderen Worten ist in dieser Ausgestaltungsform wenigstens eine Kante und/oder Ecke des Griffelements mit einem Radius von weniger als 3,2 mm ausgestaltet. Da das zweite Material erfindungsgemäß eine Shore A Härte von weniger als 50 aufweist und das Material bei einer Krafteinwirkung entsprechend stark elastisch verformbar ist, kann ein Kantenradius von weniger als 3,2 mm zur Ausgestaltung des Griffelements an dessen Außenseite realisiert werden. Insbesondere kann die Außenseite des Griffelements ganz oder teilweise scharfkantig gestaltet werden. Die äußere Form des Griffelements kann somit von der äußeren Form der Basiseinheit abweichen.

Der Vorteil dieser Ausgestaltung besteht darin, dass auch ein scharfkantiges Design des Betätigungsgriffs bei gleichzeitiger Wahrung sicherheitsrelevanter Anforderungen realisierbar ist.

In einer Ausgestaltungsform des Betätigungsgriffs ist das Griffelement mittels eines Spritzgussverfahrens auf der Basiseinheit, insbesondere auf dem Grundkörper, ausgebildet.

Mit anderen Worten wird in dieser Ausführung die mechanische Verbindung zwischen der Basiseinheit und dem Griffelement wenigstens zeitabschnittsweise gleichzeitig mit der Erzeugung des Griffelements realisiert. Basiseinheit und Griffelement bilden somit eine sogenannte Zweikomponenten-Baugruppe aus. Die durch den Spritzguss erzeugte mechanische Verbindung kann kraft-, form- und/oder stoffschlüssig sein.

Insbesondere ist das Griffelement an den Grundkörper angespritzt, so dass Grundkörper und Griffelement eine Zweikomponenten-Baugruppe ausbilden. Diese Zweikomponenten-Baugruppe bildet durch eine mechanische Verbindung mit dem Befestigungselement den Betätigungsgriff aus.

Der Vorteil dieser Ausgestaltung besteht in der Realisierung der mechanischen Verbindung zwischen Basiseinheit, insbesondere deren Grundkörper, während des Herstellungsprozesses des Griffelements. Damit geht eine Einsparung von Prozesszeit und Prozesskosten einher.

In einer alternativen Ausgestaltungsform ist das Griffelement mit der Basiseinheit oder dem Grundkörper mittels eines Klebstoffes adhäsiv verbunden.

In einer Ausgestaltungsform des Betätigungsgriffs weist das erste, im Wesentlichen die Basiseinheit ausbildende, Material eine Brinell-Härte von wenigstens 55 auf.

Die Härte nach Brinell wird typischerweise ermittelt nach DIN EN ISO 6506-1.

Mit anderen Worten weist die Basiseinheit, insbesondere der Grundkörper, einen im Vergleich zum Griffelement hohen Widerstand gegen Verformung auf. Somit ist die Basiseinheit dazu eingerichtet, eine Kraft auf eine mit dem Betätigungsgriff verbundene Betätigungseinrichtung zu übertragen wie beispielsweise einer Abdeckungseinrichtung für ein Ablagefach, zwecks Bewegung derselben zum Öffnen und/oder Schließen des Ablagefachs.

Der Vorteil liegt in der einfachen Realisierung der Kraftübertragung von einer Person auf eine manuell zu betätigende Betätigungseinrichtung mittels des Betätigungsgriffs.

Ein zweiter Aspekt der Erfindung ist eine Abdeckungseinrichtung, insbesondere zur Abdeckung eines Ablageraums in einem Kraftfahrzeug, wie zum Beispiel in einer Mittelkonsole, umfassend eine Betätigungseinrichtung, insbesondere ein auf- und abrollbares Abdeckungselement, mit wenigstens einem daran angeordneten erfindungsgemäßen Betätigungsgriff.

Die Abdeckungseinrichtung ist insbesondere eine Einrichtung zur Abdeckung eines Ablageraums in einem Kraftfahrzeug. Alternativ kann die Abdeckungseinrichtung der Abdeckung einer Armatur oder anderen Einrichtung im Innenraum eines Kraftfahrzeugs dienen.

Die Abdeckungseinrichtung umfasst insbesondere ein auf- und abrollbares Abdeckungselement, welches auch als Rollo bezeichnet werden kann, an dem wenigstens ein erfindungsgemäßer Betätigungsgriff angeordnet ist. Der Betätigungsgriff dient dazu, die Abdeckungseinrichtung zu betätigen, das heißt, zwecks Öffnens und/oder Schließens eines von der Abdeckungseinrichtung abgedeckten bzw. abzudeckenden Ablageraums zu bewegen.

In einer Ausgestaltungsform kann dabei die Basiseinheit ganz oder teilweise mit dem Abdeckungselement eine bauliche Einheit ausbilden.

Der Vorteil besteht im zur Verfügung stellen einer Abdeckungseinrichtung, insbesondere zur Verwendung in einem Kraftfahrzeug, deren Betätigungsgriff die erforderlichen Sicherheitsanforderungen erfüllt und dessen äußeren Form eine hohe Gestaltungsfreiheit aufweist.

Ein dritter Aspekt der Erfindung ist ein Ablagefach, insbesondere ein Rollofach, zur Anordnung in oder an einer Mittelkonsole eines Kraftfahrzeugs, umfassend einen Ablageraum sowie wenigstens eine erfindungsgemäße Abdeckungseinrichtung zur Abdeckung des Ablageraums.

Ein weiterer Aspekt der Erfindung ist ein Kraftfahrzeug, insbesondere ein Personenkraftwagen, umfassend wenigstens einen erfindungsgemäßen Betätigungsgriff, wenigstens eine erfindungsgemäße Abdeckungseinrichtung und/oder wenigstens ein erfindungsgemäßes Anlagefach.

Dabei kann das Ablagefach, welches insbesondere ein Rollofach ist, in verschiedenen Ausrichtungen im Innenraum eines Fahrzeugs angeordnet sein. In einer Ausführungsform handelt es sich beispielsweise um ein Mittelkonsolen-Rollenfach, welches im Wesentlichen zwischen zwei benachbarten Sitzen des Fahrzeugs, insbesondere zwischen Fahrer- und Beifahrersitz, angeordnet ist. In einem solchen Fall ist die Abdeckungseinrichtung bezüglich ihrer Haupterstreckungsebene im Wesentlichen waagerecht bzw. parallel zu einer Aufstellungsebene des Fahrzeugs angeordnet bzw. ausgerichtet.

Alternativ kann das Rollofach im Armaturenbereich der Instrumententafel eines Kraftfahrzeugs angeordnet sein, so dass die Abdeckungseinrichtung bezüglich ihrer Haupterstreckungsebene im Wesentlichen senkrecht zu einer Aufstellungsebene des Fahrzeugs angeordnet bzw. ausgerichtet ist.

Alternativ oder zusätzlich kann der erfindungsgemäße Betätigungsgriff an diversen Innenraum-Ausstattungselementen eines Kraftfahrzeugs angeordnet sein und zu deren Betätigung eingerichtet und ausgebildet sein. Somit ist ebenfalls eine Anordnung zwischen Sitzen im hinteren Bereich des Fahrgastraums, also zwischen Rücksitzen, und/oder in oder an der Innenverkleidung von Fahrzeugtüren nicht ausgeschlossen.

In einer Ausführungsform des Betätigungsgriffs sind wenigstens diejenigen Kanten und/oder Ecken der Außenseite mit einem Radius von mehr als 3,2 mm abgerundet, welche zu einem benachbarten Objekt im Innenraum eines Kraftfahrzeugs, in dem der Betätigungsgriff angeordnet bzw. anzuordnen ist, einen Abstand von weniger als 82,5 mm aufweisen. Mit anderen Worten sind wenigstens diejenigen Kanten und/oder Ecken entsprechend abgerundet, welche bei einer Kopfaufschlagprüfung mit einem einen Kopf simulierenden Prüfkörper in Berührung kommen können.

Die Erfindung wird im Folgenden anhand des in den beiliegenden Zeichnungen dargestellten Ausführungsbeispiels erläutert.

Es zeigen
Fig. 1: eine Ausgestaltungsform des erfindungsgemäßen Betätigungsgriffs in dreidimensionaler Ansicht;
Fig. 2: die Ausgestaltungsform des erfindungsgemäßen Betätigungsgriffs gemäß Figur 1 als Explosionszeichnung in dreidimensionaler Ansicht; sowie
Fig. 3: eine Ausgestaltungsform eines erfindungsgemäßen Ablagefachs.

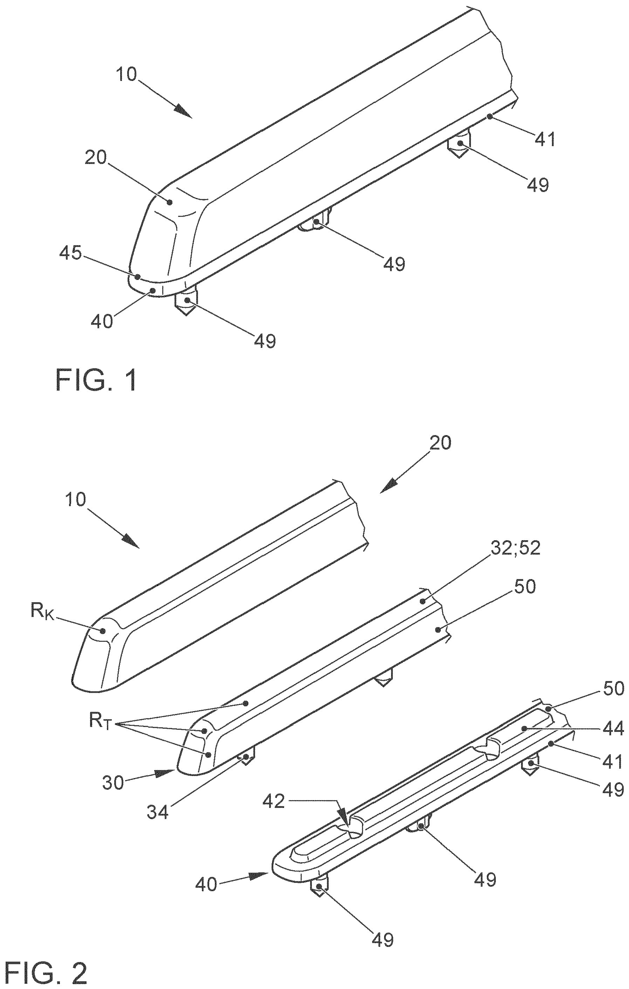

Figur 1 zeigt in dreidimensionaler Ansicht eine Ausgestaltungsform des erfindungsgemäßen Betätigungsgriffs 10 zur Anordnung an einer Betätigungseinrichtung, wie sie beispielsweise zum Öffnen und/oder Schließen von Fächern, Ablagen und/oder Armaturen im Innenraum eines Kraftfahrzeugs verwendet wird. In der gezeigten Ansicht ist zu sehen, dass an der darstellungsgemäßen Unterseite vom Griffelement 20 ein Befestigungselement 40 angeordnet ist. Zum Zweck einer optisch ansprechenden Gestaltung ist das Befestigungselement 20 auch ein Dekorelement, welches beispielsweise wenigsten teilweise verchromt ausgeführt ist. An der Unterseite des Befestigungselement 40, welches die Anschlussseite 41 des Betätigungsgriffs 10 ist, sind Fixierungselemente 49 zu erkennen. Im gezeigten Beispiel bilden das Befestigungselement 40 und die Fixierungselemente 49 eine bauliche Einheit. Die Fixierungselemente 49 dienen dazu, den Betätigungsgriff 10 an einer Betätigungseinrichtung zu positionieren und mit der Betätigungseinrichtung beispielsweise eines Ablagefachs mechanisch zu verbinden. Die Betätigungseinrichtung verfügt zu diesem Zweck über korrespondierende Aussparungen zur Aufnahme der Fixierungselemente 49.

Das Griffelement 20 ist erfindungsgemäß bevorzugt aus einem ersten weichen Material, insbesondere einem Material mit einer Shore A Härte von weniger als 50, ausgebildet. In einer Ausgestaltungsform ist das Griffelement 20 mittels eines Spritzgussprozesses auf der Oberseite einer Basiseinheit, insbesondere einem Grundkörper der Basiseinheit, der aus einem zweiten härteren Material besteht, ausgebildet. Der Grundkörper ist in Figur 1 nicht zu sehen.

Im gezeigten Beispiel sind die benachbarten Außenflächen der Oberseite des Griffelements 20 zueinander abgerundet. Dies ist erfindungsgemäß nicht zwingend erforderlich. Da das Griffelement 20 aus einem entsprechend weichen Material ausgeführt ist, stellt das Griffelement 20 kein Verletzungsrisiko, insbesondere für den Kopf eines Fahrzeuginsassen, im Falle eines Unfalls, dar. Lediglich die aus einem härteren Material ausgeführte Basiseinheit muss entsprechende Anforderungen erfüllen, so dass die optische Gestaltung des Griffelements 20, insbesondere seine äußere Form, im Wesentlichen frei gewählt werden kann.

In Figur 1 ist zu erkennen, dass der Betätigungsgriff 10 so ausgeführt ist, dass das Befestigungselement 40 teilweise die Außenseite des Betätigungsgriffs 10 ausbildet, also sichtbar ist. Der Übergang 45 zwischen den Außenseiten von Befestigungselement 40 und Griffelement 20 ist im Wesentlichen eben, mit anderen Worten fugenlos, ausgeführt.

Figur 2 zeigt die Ausgestaltungsform des erfindungsgemäßen Betätigungsgriffs 10 gemäß Figur 1 als Explosionszeichnung in dreidimensionaler Ansicht.

In dieser Darstellung ist zu sehen, dass an der Oberseite des Befestigungselements 40 mittels Verbindungselementen 34 und komplementären Aussparungen 42 sowie einem Positionierungselement 44 ein Grundkörper 30 angeordnet ist. In der gezeigten Ausführungsform, und ebenfalls Figur 1 zu entnehmen, ist der Grundkörper 30 des Betätigungsgriffs 10 nach bestimmungsgemäßem Zusammenfügen aller gezeigten Elemente für einen Nutzer nicht sichtbar. Grundkörper 30 und Befestigungselement 40 zusammen bilden die Basiseinheit 50 des Betätigungsgriffs 10 aus.

Der Grundkörper 30 dient der Betätigung einer mit dem Betätigungsgriff 10 ausgestatteten Betätigungseinrichtung und somit dem Öffnen und/oder Schließen eines Ablagefachs, welches mit einer entsprechenden Abdeckungseinrichtung ausgestattet ist. Mit anderen Worten wird die zum Öffnen und/oder Schließen erforderliche Kraft mittels des Grundkörpers 30 übertragen. Der Grundkörper 30 ist zu diesem Zweck aus einem Material ausgeführt, welches eine höhere Härte und Festigkeit aufweist als das Material des Griffelements 20, welches primär die Funktion einer für einen Nutzer ansprechenden Gestaltung erfüllt.

Die Oberseite des Grundkörpers 32, welche gleichzeitig ein Teil der Oberseite der Basiseinheit 52 ist, wird durch mehrere einander benachbarte Flächen ausgebildet. Zwecks Minimierung eines Verletzungsrisikos im Falle eines Kopfaufschlags eines Fahrzeuginsassen auf den Betätigungsgriff 10 sind die Übergänge zwischen den benachbarten Flächen der Oberseite 32, 52 abgerundet. Der Radius der Abrundung R_{T} beträgt dabei wenigstens 3,2 mm. Nicht alle Flächenübergange bzw. Kanten und/oder Ecken des Grundkörpers 30 bzw. der Basiseinheit 50 sind zwingend mit einem Radius von mehr als 3,2 mm ausgestaltet. Kanten und/oder Ecken, welche entsprechend der Anordnung des Betätigungsgriffs 10 im Fahrzeug zu einem benachbarten Element des Fahrzeuginnenraums weniger als 82,5 mm beabstandet sind, müssen eine derartige Anforderung nicht erfüllen, da sie kein entsprechendes Risikopotential für einen Kopfaufschlag bergen. Mit anderen Worten müssen lediglich die Kanten und/oder Ecken der Oberseite 32, 52 mit einem Radius R_{T} von wenigstens 3,2 mm versehen sein, die mit einem lichten Abstand von 82,5 mm zu einem benachbarten Körper verbaut werden. In Figur 2 sind dies beispielhaft die Kanten, welche nach darstellungsgemäß vorne und oben weisen.

Im Gegensatz dazu können die Kanten und/oder Ecken der Oberseite des Griffelements 20, welche im Wesentlichen die Außenseite des Betätigungsgriffs 10 darstellt, mit einem Radius R_{K} ausgestaltet sein, der kleiner als 3,2mm ist. Die Kanten des Griffelements 20 können folglich scharfkantig ausgeführt sein. Durch das Material des Griffelements 20 stellen diese kein Verletzungsrisiko dar.

Analog zu Figur 1 ist auch hier die Anschlussseite 41 als Unterseite des Befestigungselements 40 ausgeführt, an der entsprechende Fixierungselemente 49 angeordnet sind.

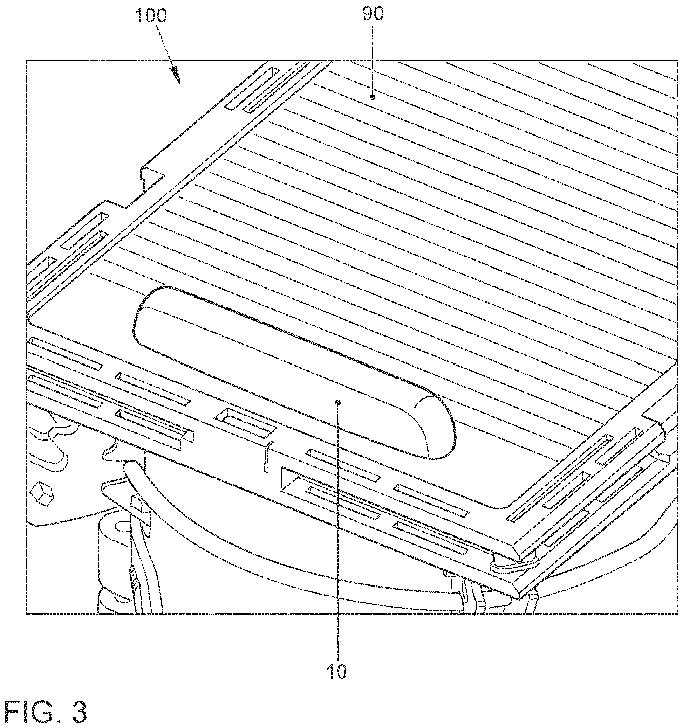

Figur 3 zeigt eine Ausgestaltungsform eines erfindungsgemäßen Ablagefachs 100. Zu erkennen ist eine Abdeckungseinrichtung, welche eine Betätigungseinrichtung 90, hier eine als Rollo aufgeführtes Abdeckungselement, und einen Betätigungsgriff 10 umfasst, die mechanisch miteinander verbunden sind. Das Abdeckungselement deckt einen Ablageraum ab. Im Figur 3 ist das Ablagefach geschlossen dargestellt.

### Bezugszeichenliste

- 10: Betätigungsgriff
- 20: Griffelement
- 30: Grundkörper
- 32: Oberseite Grundkörper
- 34: Verbindungselement
- 40: Befestigungselement
- 41: Anschlussseite
- 42: Aussparung
- 44: Positionierungselement
- 45: Übergang
- 49: Fixierungselement
- 50: Basiseinheit
- 52: Oberseite Basiselement
- 90: Betätigungseinrichtung
- 100: Ablagefach
- R_{K}: Radius Griffelement
- R_{T}: Radius Grundkörper

## Patentansprüche

1. Betätigungsgriff (10) zur Anordnung an einer manuell zu betätigenden Betätigungseinrichtung (90) im Innenraum eines Kraftfahrzeugs, umfassend eine Basiseinheit (50) ausgebildet aus einem ersten Material mit einer ersten Härte und mit einer wenigstens abschnittsweise zur Befestigung an einer Betätigungseinrichtung (90) ausgebildeten Anschlussseite (41) sowie ein mit der Basiseinheit (50) auf der der Anschlussseite (41) gegenüberliegenden Seite mechanisch verbundenes und zumindest abschnittsweise die Außenseite des Betätigungsgriffs (10) ausbildendes Griffelement (20) ausgebildet aus einem zweiten Material mit einer zweiten Härte, wobei die erste Härte größer ist als die zweite Härte und die Shore A Härte des zweiten Materials kleiner als 50 ist und zwischen in unterschiedlichen Ebenen benachbart angeordneten Außenflächen der Basiseinheit (50) ein Radius R_{T} zur wenigstens teilweisen Abrundung der Basiseinheit (50) ausgeführt ist, wobei gilt, dass R_{T} > 3,2 mm ist,
**dadurch gekennzeichnet, dass** die Basiseinheit (50) wenigstens ein Befestigungselement (40) zur mechanischen Fixierung des Betätigungsgriffs (10) an der manuell zu betätigenden Betätigungseinrichtung (90) sowie mechanisch mit dem Befestigungselement (40) verbunden einen Grundkörper (30) aufweist, wobei zumindest der Grundkörper (30) mit Abrundungen zwischen in unterschiedlichen Ebenen benachbart angeordneten Außenflächen mit einem Radius R_{T} ausgeführt ist, wobei gilt, dass R_{T} > 3,2 mm ist.

2. Betätigungsgriff (10) nach dem vorhergehenden Anspruch, **dadurch gekennzeichnet, dass** das Befestigungselement (40) wenigstens einen Abschnitt der Außenseite des Betätigungsgriffs (10) ausbildet.

3. Betätigungsgriff (10) nach einem der vorhergehenden Ansprüche, **dadurch gekennzeichnet, dass** der Grundkörper (30) am Befestigungselement (40) mittels einer kraft- und/oder formschlüssigen Verbindung, insbesondere einer Rastverbindung, fixiert ist.

4. Betätigungsgriff (10) nach einem der vorhergehenden Ansprüche, **dadurch gekennzeichnet, dass** das Griffelement (20) an seiner Außenseite zumindest eine Kante und/oder Ecke mit einem Kantenradius R_{K} aufweist, wobei R_{K} < 3,2 mm ist.

5. Betätigungsgriff (10) nach einem der vorhergehenden Ansprüche, **dadurch gekennzeichnet, dass** das Griffelement (20) mittels eines Spritzgussverfahrens auf der Basiseinheit (50), insbesondere auf dem Grundkörper (30), ausgebildet ist.

6. Betätigungsgriff (10) nach einem der vorhergehenden Ansprüche, **dadurch gekennzeichnet, dass** das erste im Wesentlichen die Basiseinheit (50) ausbildende Material eine Brinell-Härte von wenigstens 55 aufweist.

7. Abdeckungseinrichtung, insbesondere zur Abdeckung eines Ablageraums in einem Kraftfahrzeug, umfassend eine Betätigungseinrichtung (90), insbesondere ein auf- und abrollbares Abdeckungselement, mit wenigstens einem daran angeordneten Betätigungsgriff (10) gemäß einem der Ansprüche 1-6.

8. Ablagefach (100), insbesondere Rollofach zur Anordnung in oder an einer Mittelkonsole eines Kraftfahrzeugs, umfassend einen Ablageraum sowie wenigstens eine Abdeckungseinrichtung gemäß Anspruch 7 zur Abdeckung des Ablageraums.

9. Kraftfahrzeug, insbesondere Personenkraftwagen, umfassend wenigstens einen Betätigungsgriff (10) gemäß einem der Ansprüche 1-6 und/oder wenigstens eine Abdeckungseinrichtung gemäß Anspruch 7 und/oder wenigstens ein Ablagefach (100) gemäß Anspruch 8.

## Claims

1. Actuating grip (10) for arrangement on an actuation device (90), to be actuated manually, in the interior compartment of a motor vehicle, comprising a base unit (50) which is formed from a first material having a first hardness and which has a connection side (41), said connection side being configured for fastening to an actuation device (90) at least sectionally, and comprising a grip element (20) which is connected mechanically to the base unit (50) on the side that is opposite the connection side (41) and which at least sectionally forms the outer side of the actuating grip (10) and which is formed from a second material having a second hardness, wherein the first hardness is greater than the second hardness and the Shore A hardness of the second material is less than 50 and, between outer surfaces of the base unit (50) arranged adjacently in different planes, a radius R_{T} is configured for at least partial rounding of the base unit (50), where R_{T} > 3.2 mm, **characterized in that** the base unit (50) has at least one fastening element (40) for mechanically fixing the actuating grip (10) to the actuation device (90) to be actuated manually and, connected mechanically to the fastening element (40), one main body (30), wherein at least the main body (30) is formed with rounded portions between outer surfaces arranged adjacently in different planes that have a radius R_{T}, where R_{T} > 3.2 mm.

2. Actuating grip (10) according to the preceding claim, **characterized in that** the fastening element (40) forms at least one portion of the outer side of the actuating grip (10).

3. Actuating grip (10) according to either of the preceding claims, **characterized in that** the main body (30) is fixed to the fastening element (40) by means of a force-fitting and/or form-fitting connection, in particular a latching connection.

4. Actuating grip (10) according to one of the preceding claims, **characterized in that**, on its outer side, the grip element (20) has at least one edge and/or corner with an edge radius R_{K}, where R_{K} < 3.2 mm.

5. Actuating grip (10) according to one of the preceding claims, **characterized in that** the grip element (20) is formed on the base unit (50), in particular on the main body (30), by means of an injection-moulding process.

6. Actuating grip (10) according to one of the preceding claims, **characterized in that** the first material, which substantially forms the base unit (50), has a Brinell hardness of at least 55.

7. Covering device, in particular for covering a storage space in a motor vehicle, comprising an actuation device (90), in particular a covering element that is able to be rolled up and unrolled, having at least one actuating grip (10) according to one of Claims 1-6 arranged thereon.

8. Storage compartment (100), in particular a roller-blind compartment for arrangement in or at a central console of a motor vehicle, comprising a storage space and at least one covering device according to Claim 7 for covering the storage space.

9. Motor vehicle, in particular a passenger motor vehicle, comprising at least one actuating grip (10) according to one of Claims 1-6 and/or at least one covering device according to Claim 7 and/or at least one storage compartment (100) according to Claim 8.

## Revendications

1. Poignée d'actionnement (10) destinée à être agencée sur un dispositif d'actionnement (90) devant être actionné manuellement dans l'espace intérieur d'un véhicule automobile, comprenant une unité de base (50) formée à partir d'un premier matériau présentant une première dureté et comportant un côté de raccordement (41) réalisé au moins dans certaines parties pour la fixation à un dispositif d'actionnement (90) ainsi qu'un élément de poignée (20) relié mécaniquement à l'unité de base (50) sur le côté opposé au côté de raccordement (41) et formant au moins dans certaines parties le côté extérieur de la poignée d'actionnement (10), lequel élément de poignée est formé à partir d'un deuxième matériau présentant une deuxième dureté, la première dureté étant supérieure à la deuxième dureté et la dureté Shore A du deuxième matériau étant inférieure à 50 et, entre des surfaces extérieures de l'unité de base (50) disposées de manière adjacente dans des plans différents, est réalisé un rayon R_{T} servant à arrondir au moins partiellement l'unité de base (50), avec R_{T} > 3,2 mm,
**caractérisée en ce que** l'unité de base (50) présente au moins un élément de fixation (40) servant à la fixation mécanique de la poignée d'actionnement (10) au dispositif d'actionnement (90) devant être actionné manuellement ainsi qu'un corps de base (30) relié mécaniquement à l'élément de fixation (40), au moins le corps de base (30) étant réalisé avec des arrondis entre des surfaces extérieures disposées de manière adjacente dans des plans différents présentant un rayon R_{T}, avec R_{T} > 3,2 mm.

2. Poignée d'actionnement (10) selon la revendication précédente, **caractérisée en ce que** l'élément de fixation (40) forme au moins une partie du côté extérieur de la poignée d'actionnement (10).

3. Poignée d'actionnement (10) selon l'une des revendications précédentes, **caractérisée en ce que** le corps de base (30) est fixé à l'élément de fixation (40) à l'aide d'une liaison par force et/ou par complémentarité de formes, en particulier une liaison par encliquetage.

4. Poignée d'actionnement (10) selon l'une des revendications précédentes, **caractérisée en ce que** l'élément de poignée (20) présente, sur son côté extérieur, au moins une arête et/ou un coin présentant un rayon d'arête R_{K}, avec R_{K} < 3,2 mm.

5. Poignée d'actionnement (10) selon l'une des revendications précédentes, **caractérisée en ce que** l'élément de poignée (20) est formé sur l'unité de base (50), en particulier sur le corps de base (30), à l'aide d'un procédé de moulage par injection.

6. Poignée d'actionnement (10) selon l'une des revendications précédentes, **caractérisée en ce que** le premier matériau formant essentiellement l'unité de base (50) présente une dureté Brinell d'au moins 55.

7. Dispositif de recouvrement, en particulier servant à recouvrir un espace de rangement dans un véhicule automobile, comprenant un dispositif d'actionnement (90), en particulier un élément de recouvrement pouvant être enroulé et déroulé, comportant au moins une poignée d'actionnement (10), disposée sur celui-ci, selon l'une des revendications 1 à 6.

8. Compartiment de rangement (100), en particulier compartiment à store destiné à être disposé dans ou sur une console centrale d'un véhicule automobile, comprenant un espace de rangement ainsi qu'au moins un dispositif de recouvrement selon la revendication 7 pour le recouvrement de l'espace de rangement.

9. Véhicule automobile, en particulier voiture particulière, comprenant au moins une poignée d'actionnement (10) selon l'une des revendications 1 à 6 et/ou au moins un dispositif de recouvrement selon la revendication 7 et/ou au moins un compartiment de rangement (100) selon la revendication 8.
